# EUROPÄISCHE PATENTSCHRIFT

(11) **EP 4 545 766 B1**
(45) Veröffentlichungstag und Bekanntmachung des Hinweises auf die Patenterteilung: **29.04.2026**
(21) Anmeldenummer: 24207964.8
(22) Anmeldetag: 22.10.2024
(51) Int. Cl.: F02B 39/10, F02B 39/12, F02B 61/02, F02B 67/06

(54) **MOTORRAD MIT EINER BRENNKRAFTMASCHINE MIT EINEM ABTRIEBSMITTEL UND MIT EINER AUFLADEVORRICHTUNG FÜR DIE BRENNKRAFTMASCHINE**
MOTORCYCLE WITH AN INTERNAL COMBUSTION ENGINE HAVING AN OUTPUT MEANS AND WITH A CHARGING DEVICE FOR THE INTERNAL COMBUSTION ENGINE
MOTOCYCLETTE AVEC UN MOTEUR À COMBUSTION INTERNE AVEC UN MOYEN DE SORTIE ET UN DISPOSITIF DE SURALIMENTATION POUR LE MOTEUR À COMBUSTION INTERNE

(30) Priorität: 23.10.2023 DE 102023129016
(43) Veröffentlichungstag der Anmeldung: 30.04.2025
(73) Patentinhaber: KTM AG, 5230 Mattighofen (AT)
(72) Erfinder: FÜRSCHUSS, Alexander, 3400 Klosterneuburg (AT)
(74) Vertreter: Söllner, Udo

(56) Entgegenhaltungen:
- EP-A1- 3 421 757
- EP-A1- 3 879 086
- WO-A1-2015/071949
- DE-A1- 102022 101 822
- US-B2- 8 087 401

## Beschreibung

Die vorliegende Erfindung betrifft ein Motorrad mit einer Brennkraftmaschine mit einem Abtriebsmittel und mit einer Aufladevorrichtung für die Brennkraftmaschine sowie einer Steuervorrichtung und einer elektrischen Maschine nach dem Oberbegriff des Anspruchs 1.

Motorräder mit einer Aufladevorrichtung in der Form eines vom Abgasstrom der Brennkraftmaschine des Motorrads angetriebenen Verdichters sind bereits bekannt geworden. Zweck der Aufladung war dabei die Erreichung von hoher Spitzenleistung, wobei diese Art von Motorrädern aufgrund des kritischen Ansprechverhaltens der Aufladevorrichtung in der Form eines Turboladers zwar die gewünschte hohe Spitzenleistung zur Verfügung stellen konnten, fahrdynamisch aber kritisch waren, da das von der Brennkraftmaschine nach dem Einsetzen des Turboladers sehr plötzlich abgegebene Drehmoment schwer zu beherrschen war, sodass diese Motorräder mit Turboaufladung der Brennkraftmaschine relativ bald wieder an Bedeutung verloren.

Die Entwicklung der bei Motorrädern eingesetzten Brennkraftmaschinen führte dann zu den gewünschten hohen Spitzenleistungen, welche über ein jeweiliges hohes Drehzahlniveau der Brennkraftmaschine erreicht wurden. Dies aber wiederum führte zu Nachteilen hinsichtlich der Effizienz der Brennkraftmaschine und der emittierten Abgaswerte.

Eine hohe Effizienz der Brennkraftmaschine bei gleichzeitig reduzierten Abgaswerten aber ist Ziel der Entwicklung der Brennkraftmaschine bei Motorrädern, sodass hier Bedarf daran besteht, Brennkraftmaschinen mit einer Betriebsstrategie zu betreiben, welche über den gesamten Last- und Drehzahlbereich ein Verbrennungsluftverhältnis Lambda von etwa 1 aufweist, um die katalytische Nachbehandlung der Abgase der Brennkraftmaschine zu verbessern und die Abgasemissionen der Brennkraftmaschine zu verringern.

Auch soll die Brennkraftmaschine bei einem entsprechenden Wunsch des Benutzers des Motorrads unmittelbar Drehmoment zur Beschleunigung beispielsweise bei einem Überholvorgang bereitstellen und gleichzeitig soll die Verlustleistung der Brennkraftmaschine in der Form von Reibungsverlusten und Ladungswechselverlusten reduziert werden.

Anhand der DE 10 2012 104 355 B4 sind ein Verfahren zur Aufladung einer Brennkraftmaschine und eine Aufladevorrichtung dafür bekannt geworden.

Anhand der DE 10 2014 218 538 A1 ist ein Kompressor eines Verbrennungsmotors bekannt geworden. DE 10 2022 101 822 A1 und US 8 087 401 B2 zeigen weitere Anordnungen von Brennkraftmaschinen mit Aufladevorrichtungen mit elektrischen Maschinen sowie mechanischer Verbindung zwischen Verdichter und Kurbelwelle der Brennkraftmaschine.

Der vorliegenden Erfindung liegt die Aufgabe zugrunde, ein Motorrad mit einer Brennkraftmaschine und einer Aufladevorrichtung für die Brennkraftmaschine bereitzustellen, welche einen unmittelbaren Ladedruckaufbau bei einem entsprechenden Fahrerwunsch bietet und insbesondere im Teillastbereich der Brennkraftmaschine die Verlustleistung der Brennkraftmaschine verringert.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft ein Motorrad mit einer Brennkraftmaschine mit einem Abtriebsmittel und mit einer Aufladevorrichtung für die Brennkraftmaschine sowie einer Steuervorrichtung und einer elektrischen Maschine, wobei die Aufladevorrichtung einen Verdichter mit einer Antriebswelle besitzt und ein Getriebe mit einem Getriebeeingang und einem Getriebeausgang aufweist, und der Verdichter mittels der Antriebswelle mit dem Getriebeausgang kraftschlüssig gekoppelt ist und der Getriebeeingang mittels der elektrischen Maschine und/oder dem Abtriebsmittel antreibbar ist, wobei zwischen dem Abtriebsmittel der Brennkraftmaschine und dem Getriebeeingang eine schaltbare Kupplungseinrichtung vorgesehen ist.

Die Aufladevorrichtung besitzt also einen mittels der Antriebswelle mechanisch angetriebenen Verdichter, welcher der Bereitstellung von Ladeluft für die Brennkraftmaschine dient, also der Bereitstellung von unter Druck gesetzter Luft für die Durchführung des Verbrennungsvorgangs in dem Brennraum oder den Brennräumen der Brennkraftmaschine dient.

Die Antriebswelle des Verdichters ist mit dem Getriebeausgang kraftschlüssig gekoppelt, der Getriebeausgang kann also eine Abtriebswelle aufweisen, die mit der Antriebswelle des Verdichters kraftschlüssig gekoppelt ist oder der Verdichter kann auch direkt auf der Abtriebswelle des Getriebeausgangs drehfest angeordnet sein, sodass die Drehbewegung oder Drehbetätigung des Getriebeausgangs oder der Abtriebswelle des Getriebeausgangs für eine Drehbetätigung des Verdichters sorgt, bei dem es sich beispielsweise um einen Kompressor handeln kann.

Die Drehbetätigung des Verdichters sorgt dann dafür, dass im Ansaugtrakt der Brennkraftmaschine unter Ladedruck gesetzte Luft vorhanden ist und der Brennkraftmaschine für den Verbrennungsvorgang zur Verfügung steht.

Über ein geeignetes Übersetzungsverhältnis zwischen dem Getriebeeingang und dem Getriebeausgang kann die Drehzahl des Getriebeausgangs beziehungsweise die Drehzahl der Abtriebswelle des Getriebeausgangs hoch skaliert werden, sodass der Verdichter, also beispielsweise die Verdichterschaufeln des Verdichters mit hoher Drehzahl angetrieben werden können.

Der Getriebeeingang, also beispielsweise eine Getriebeeingangswelle des Getriebes kann bei der erfindungsgemäßen Konfiguration des Motorrads einerseits über die elektrische Maschine in Drehung versetzt werden, andererseits aber auch mittels des Abtriebsmittels der Brennkraftmaschine, sodass der Verdichter sowohl durch die elektrische Maschine als auch durch die Brennkraftmaschine angetrieben werden kann.

Zwischen dem Abtriebsmittel der Brennkraftmaschine und dem Getriebeeingang ist eine schaltbare Kupplungseinrichtung vorgesehen, welche je nach gewünschter Betriebsweise des Verdichters der Aufladevorrichtung geschlossen oder geöffnet sein kann.

Bei geschlossener Kupplungseinrichtung treibt die Brennkraftmaschine mittels des Abtriebsmittels den Getriebeeingang, also beispielsweise eine Getriebeeingangswelle des Getriebeeingangs an, die Drehzahl der Getriebeeingangswelle wird durch das Getriebe hoch skaliert, also durch im Getriebe vorgesehene Baugruppen erhöht, sodass sich die Abtriebswelle des Getriebes, also der Getriebeausgang, mit einer höheren Drehzahl dreht als die Antriebswelle des Getriebes.

Da die Antriebswelle des Verdichters mit der Abtriebswelle des Getriebes kraftschlüssig gekoppelt ist, wird durch die Drehzahlerhöhung erreicht, dass sich der Verdichter mit gegenüber der Drehzahl am Getriebeeingang erhöhter Drehzahl dreht, sodass der Ladedruck im Ansaugtrakt der Brennkraftmaschine ansteigt.

Bei dem Verdichter kann es sich um einen Spiralverdichter handeln, sodass sich letztlich die für den Ladedruckaufbau vorgesehenen Elemente oder Schaufeln des Spiralverdichters mit hoher Drehzahl drehen und für den Ladedruckaufbau sorgen.

Bei geöffneter Kupplungseinrichtung wird die Getriebeeingangswelle nicht mittels des Abtriebsmittels der Brennkraftmaschine angetrieben, also in Drehung versetzt, die elektrische Maschine der Aufladevorrichtung, welche direkt auf den Getriebeeingang wirkt, kann also den Getriebeeingang in eine Drehbewegung versetzen und somit eine Getriebeeingangswelle oder Antriebswelle des Getriebes in Drehung versetzen und zwar mit einer ersten vorbestimmten Drehzahl.

Durch das Übersetzungsverhältnis beziehungsweise die Spreizung des Getriebes kann diese erste vorbestimmte Drehzahl in eine höhere, zweite vorbestimmte Drehzahl gewandelt werden, sodass sich die Abtriebswelle oder Getriebeausgangswelle oder ganz allgemein der Getriebeausgang des Getriebes mit einer zweiten vorbestimmten Drehzahl dreht, welche dann aufgrund der kraftschlüssigen Kopplung der Antriebswelle des Verdichters mit dem Getriebeausgang der Drehzahl der Antriebswelle des Verdichters entspricht und somit die für den Ladedruckaufbau vorgesehenen Elemente oder Baugruppen oder Schaufeln des Verdichters mit der zweiten höheren Drehzahl angetrieben werden und somit der Ladedruck im Ansaugtrakt der Brennkraftmaschine unmittelbar zur Verfügung steht.

Damit kann also erreicht werden, dass durch die Bestromung der elektrischen Maschine das Laufzeug, oder die Elemente, oder die Baugruppen oder Schaufeln des Verdichters in sehr kurzer Zeit zu der zweiten vorbestimmten Drehzahl beschleunigt werden und somit der Ladedruckaufbau im Ansaugtrakt der Brennkraftmaschine in sehr kurzer Zeit stattfindet und somit ein unmittelbarer Ladedruckaufbau erfolgt.

Selbst dann also, wenn sich die Brennkraftmaschine in einem niedrigen Drehzahlbereich befindet, das Abtriebsmittel der Brennkraftmaschine also auch mit niedriger Drehzahl arbeitet und somit bei geschlossener Kupplungseinrichtung die Getriebeeingangswelle des Getriebes mit niedriger Drehzahl arbeiten würde und daher auch eine Drehzahlerhöhung durch das Getriebe nicht für ausreichend Ladedruck im Ansaugtrakt der Brennkraftmaschine führen würde, kann dadurch, dass in einem solchen Betriebszustand der Brennkraftmaschine die Kupplungseinrichtung geöffnet ist oder geöffnet wird, durch eine Bestromung der elektrischen Maschine eine starke Beschleunigung der Getriebeeingangswelle eine in kurzer Zeit stattfindende starke Drehzahlerhöhung der Getriebeeingangswelle erreicht werden und somit in kurzer Zeit aufgrund der durch das Getriebe stattfindenden Hochskalierung der Drehzahl die Drehzahl der Getriebeabtriebswelle erhöht werden und somit der im Ansaugtrakt der Brennkraftmaschine herrschende Ladedruck in kurzer Zeit erhöht werden, was dazu führt, dass das von der Brennkraftmaschine bereitgestellte Drehmoment in kurzer Zeit deutlich erhöht werden kann.

Es ist nach einer Weiterbildung der Erfindung vorgesehen, dass das Getriebe ein Stirnradgetriebe mit einer Mehrzahl an Übersetzungsstufen oder ein Planetengetriebe ist. Das Stirnradgetriebe besitzt den Vorteil einer kostengünstigen Gestaltung des Getriebes. Das Planetengetriebe besitzt den Vorteil einer bezüglich des benötigten Bauraums kompakten Lösung und auch den Vorteil, dass es die Drehzahlspreizung beziehungsweise den Drehzahlsprung zwischen der Drehzahl der Getriebeeingangswelle und der Drehzahl der Getriebeausgangswelle einfach bewerkstelligen kann. Hierbei ist davon auszugehen, dass die Getriebeeingangswelle beispielsweise eine Drehzahl von etwa 4000 Umdrehungen pro Minute bis etwa 15000 Umdrehungen pro Minute besitzt und eine Drehzahl der Antriebswelle des Verdichters im Bereich von etwa 100000 Umdrehungen pro Minute bis etwa 150000 Umdrehungen pro Minute beträgt.

Es ist nach einer Weiterbildung der Erfindung auch vorgesehen, dass das Abtriebsmittel eine Zugmittelstufe oder eine Zahnradstufe ist. Bei der Zugmittelstufe kann es sich beispielsweise um einen Kettentrieb oder einen Zahnriementrieb handeln, sodass auf einer Abtriebswelle der Brennkraftmaschine, bei der es sich beispielsweise um einen mit der Kurbelwelle der Brennkraftmaschine gekoppelten Abtriebsflansch oder auch einen Kurbelwellenstumpf handeln kann, ein Antriebsrad für eine Zahnkette oder eine andere Kettenbauart angeordnet sein kann oder eine Antriebsriemenscheibe für einen Zahnriemen angeordnet sein kann, und auf einer angetriebenen Eingangsseite der Kupplungseinrichtung ein angetriebenes Rad für die Kette oder eine angetriebene Riemenscheibe angeordnet sein kann.

Mit dieser Konfiguration kann dann die von der Brennkraftmaschine beaufschlagte angetriebene Eingangsseite der Kupplungseinrichtung in Drehbewegung versetzt werden. Wenn die Kupplungseinrichtung geschlossen ist, wird diese Drehbewegung dann als Drehbewegung auf die Getriebeeingangswelle beziehungsweise den Getriebeeingang übertragen und so die Drehbewegung in das Getriebe eingebracht und an der Ausgangsseite des Getriebes in eine hinsichtlich der Drehzahl hoch übersetzte Drehbewegung überführt, mit der letztlich der Verdichter in der Form beispielsweise einer Spiralverdichtereinheit zum Ladedruckaufbau angetrieben wird.

Es ist nach einer Weiterbildung der Erfindung auch vorgesehen, dass der Getriebeeingang eine Getriebeeingangswelle aufweist und die elektrische Maschine mit der Getriebeeingangswelle drehfest gekoppelt ist. Damit wird auch eine Konfiguration umfasst, nach der die elektrische Maschine direkt auf der Getriebeeingangswelle drehfest angeordnet ist, die elektrische Maschine oder der Elektromotor also von der Getriebeeingangswelle, durchsetzt ist. Die Getriebeeingangswelle kann beispielsweise in einem die genannten Baugruppen aufnehmenden Gehäuse drehbar gelagert sein und gleichzeitig die Abtriebswelle der elektrischen Maschine darstellen, womit eine ausgesprochen kompakte Konfiguration erzielt wird.

Es ist nach einer Weiterbildung der Erfindung auch vorgesehen, dass in einem ersten Betriebszustand die Kupplungseinrichtung geschlossen ist und die Antriebswelle des Verdichters über das Getriebe mittels des Abtriebsmittels der Brennkraftmaschine angetrieben ist und das Motorrad dazu eingerichtet ist, die Brennkraftmaschine mit von dem Verdichter unter Druck gesetzter Ladeluft zu versorgen. In diesem ersten Betriebszustand wird also ein erster Lastpfad eingestellt, der sich dadurch auszeichnet, dass die Brennkraftmaschine über die geschlossene Kupplungseinrichtung, welche auch als Trennkupplung bezeichnet werden kann, die Getriebeeingangswelle mit einer ersten Drehzahl antreibt, welche über das Übersetzungsverhältnis des Getriebes in eine zweite, höhere Drehzahl übersetzt wird und der mit der Getriebeausgangswelle drehfest gekoppelte Verdichter, bei dem es sich beispielsweise um einen Spiralverdichter handeln kann, mit der zweiten höheren Drehzahl betrieben wird und der Verdichter liefert daraufhin entsprechend seiner Drehzahl die verdichtete Ladeluft, welche dann der Brennkraftmaschine zur Verfügung gestellt wird.

Es ist nach einer Weiterbildung der Erfindung auch vorgesehen, dass in einem zweiten Betriebszustand die Kupplungseinrichtung geöffnet ist und die Antriebswelle des Verdichters, welche mit der Getriebeausgangswelle gekoppelt ist, über das Getriebe, welches eingangsseitig von der elektrischen Maschine mit einer Drehkraft beaufschlagt wird, angetrieben wird. Dieser zweite Betriebszustand zeichnet sich dadurch aus, dass die Kupplungseinrichtung geöffnet ist und die elektrische Maschine beispielsweise über die Steuervorrichtung so angesteuert wird, dass sie ein Antriebsmoment auf die Getriebeeingangswelle abgibt, sich die Getriebeeingangswelle somit mit einer ersten Drehzahl dreht, diese Drehzahl mittels des Getriebes aufgrund des Übersetzungsverhältnisses des Getriebes in eine zweite, höhere Drehzahl übersetzt wird, welche dann am Getriebeausgang beziehungsweise der Getriebeausgangswelle anliegt, sich die Getriebeausgangswelle also mit der zweiten höheren Drehzahl dreht, und damit der mit der Getriebeausgangswelle drehfest gekoppelte Verdichter mit der zweiten höheren Drehzahl betrieben wird.

Diese Konfiguration entspricht beispielsweise einem Betriebszustand, in welchem sich die Brennkraftmaschine des Motorrads in einem niedrigen Drehzahlbereich befindet und demgemäß in einem niedrigen Leistungsbereich. Wird in einem solchen Betriebszustand der Brennkraftmaschine ein Fahrerwunsch festgestellt, der der Abgabe einer erhöhten Motorleistung der Brennkraftmaschine entspricht, was beispielsweise dann der Fall ist, wenn der Benutzer des Motorrads einen Überholvorgang einleiten möchte, dann wird die geschlossene Kupplungseinrichtung geöffnet und der Verdichter mittels des Elektromotors oder der elektrischen Maschine angetrieben und zwar in einer solchen Weise, dass die Drehzahl der Getriebeeingangswelle, welche bei geschlossener Kupplungseinrichtung noch der Abtriebsdrehzahl des Abtriebsmittels entsprochen hat, durch die Momentenbeaufschlagung mittels der elektrischen Maschine deutlich erhöht wird und so die Abtriebsdrehzahl der Getriebeausgangswelle deutlich ansteigt und damit auch die Drehzahl des Verdichters deutlich ansteigt. Damit wird dem Fahrerwunsch entsprechend die Brennkraftmaschine unmittelbar mit einem größeren Massenstrom an unter höheren Ladedruck gesetzter Ladeluft versorgt, womit das von der Brennkraftmaschine abgegebene Drehmoment unmittelbar ansteigt und somit auch unmittelbar mehr Antriebsleistung der Brennkraftmaschine für den beispielsweise genannten Überholvorgang zur Verfügung steht. Damit wird der Überholvorgang wesentlich dynamischer.

Es steigt damit auch die Drehzahl der Brennkraftmaschine unmittelbar an, sodass die Drehzahl des Abtriebsmittels der Brennkraftmaschine ebenso unmittelbar ansteigt, bis die Drehzahl des Abtriebsmittels der Brennkraftmaschine der Drehzahl der Getriebeeingangswelle, welche von der elektrischen Maschine beschleunigt wurde, entspricht, sodass die geöffnete Kupplungseinrichtung geschlossen werden kann und ab diesem Zeitpunkt der Antrieb des Verdichters von der Brennkraftmaschine übernommen wird und somit die elektrische Maschine in einen Betriebszustand versetzt werden kann, welcher sich von dem Betriebszustand unterscheidet, in welchem die elektrische Maschine die Getriebeeingangswelle antreibt.

Es ist also nach einer Weiterbildung der Erfindung vorgesehen, dass das Motorrad dazu eingerichtet ist, den zweiten Betriebszustand mit geöffneter Kupplungseinrichtung bei steigender Drehzahl der Brennkraftmaschine beizubehalten bis zu einer vorbestimmten Drehzahl der Brennkraftmaschine, nach deren Erreichung die Kupplungseinrichtung geschlossen wird und die elektrische Maschine in einen sich von einem zum Antrieb des Verdichters eingerichteten Betriebszustand unterscheidenden Betriebszustand versetzt wird.

Auch ist es nach einer Weiterbildung der Erfindung vorgesehen, dass das Motorrad dazu eingerichtet ist, die elektrische Maschine in einen Betriebszustand zu versetzen, in dem sie den Verdichter zur Bereitstellung von verdichteter Ladeluft antreibt oder in einen generatorischen Betriebszustand zu versetzen, in dem sie ein Bordspannungsnetz des Motorrads mit elektrischer Energie versorgt oder in einen Betriebszustand zu versetzen, in dem sie Antriebsleistung zum Antrieb des Motorrads bereitstellt, die der Antriebsleistung der Brennkraftmaschine zum Antrieb des Motorrads hinzugefügt ist.

Es ist nach einer Weiterbildung der Erfindung auch vorgesehen, dass das Motorrad dazu eingerichtet ist, bei für den Antrieb des Motorrads ausreichender saugmotorischer Antriebsleistung der Brennkraftmaschine die Kupplungseinrichtung in einen geöffneten Zustand zu versetzen und die elektrische Maschine in einen antriebslosen Zustand zu versetzen.

Damit wird erreicht, dass in einem Betriebszustand oder Lastzustand des Motorrads, in welchem die Brennkraftmaschine im saugmotorischen Betrieb, also ohne Aufladung durch den Verdichter betrieben wird, also ausreichend Leistung für diesen Betriebszustand durch die Brennkraftmaschine bereitgestellt wird, das Motorrad die schaltbare Kupplungseinrichtung in einen geöffneten Zustand versetzen kann. Der Verdichter wird dann von der Brennkraftmaschine nicht angetrieben und erfährt keine Antriebsleistung. In diesem Zustand kann auch die elektrische Maschine in einen antriebslosen Zustand versetzt werden. Dadurch wird erreicht, dass einerseits die Gesamtreibungsverluste der Brennkraftmaschine reduziert sind, die Brennkraftmaschine also weniger Kraftstoff benötigt und damit verbrauchsoptimiert betrieben werden kann und wenn zusätzlich auch noch die elektrische Maschine in einen antriebslosen Zustand versetzt wird, also den Verdichter nicht antreibt und auch nicht in einen generatorischen Betrieb versetzt ist, nimmt der Gesamtenergieverbrauch des Motorrads weiter ab, da auch der generatorische Betrieb der elektrischen Maschine keine Antriebsleistung durch die Brennkraftmaschine benötigt.

Wenn dann beispielsweise durch die Betätigung des Gasdrehgriffes des Motorrads durch den Fahrer oder Benutzer des Motorrads eine Lastanforderung in das Motorrad eingeleitet wird und dies beispielsweise von der Steuervorrichtung festgestellt wird, kann die Steuervorrichtung die elektrische Maschine zum Antrieb des Verdichters ansteuern, um Ladedruck aufzubauen. Die Brennkraftmaschine liefert daraufhin unmittelbar Mehrleistung, das Motorrad wird beschleunigt, die Drehzahl der Brennkraftmaschine nimmt zu und zwar bis zu dem vorstehend bereits erwähnten Synchronisationspunkt, an dem die Abtriebsdrehzahl des Abtriebsmittels mit der Drehzahl der vom Elektromotor oder der elektrischen Maschine angetriebenen Getriebeeingangswelle übereinstimmt, dann kann die schaltbare Kupplungseinrichtung geschlossen werden und der weitere Antrieb des Verdichters durch die Brennkraftmaschine erfolgen. Die elektrische Maschine kann deaktiviert werden oder beispielsweise in einen generatorischen Betriebszustand geschaltet werden, wenn beispielsweise die Fahrzeugbatterie des Motorrads über das Bordspannungsnetz des Motorrads geladen werden muss.

Es ist auch möglich, die elektrische Maschine bei geschlossener Kupplungseinrichtung motorisch zu betreiben, also Antriebsleistung für den Verdichter durch die elektrische Maschine bereitzustellen, was dazu führt, dass die ansonsten notwendige Antriebsleistung für den Verdichter, welche von der Brennkraftmaschine bereitgestellt werden muss, reduziert werden kann. Damit steht die ansonsten erforderliche Antriebsleistung für den Verdichter für den Vortrieb des Motorrads zur Verfügung, womit ein Betriebszustand des Motorrads mit maximaler Leistung oder maximaler Beschleunigung bereitgestellt werden kann.

Es ist nach einer Weiterbildung der Erfindung auch vorgesehen, dass das Motorrad dazu eingerichtet ist, die Drehzahl der Antriebswelle des Verdichters durch eine Veränderung der Abtriebsdrehzahl des Getriebeausgangs an den Bedarf an Ladeluft der Brennkraftmaschine anzupassen. Damit kann die Förderkennlinie des Verdichters an die Motorschlucklinie angepasst werden.

Es ist nach einer Weiterbildung der Erfindung auch vorgesehen, dass das Motorrad dazu eingerichtet ist, eine von einem Benutzer des Motorrads ausgelöste erhöhte Leistungsanforderung der Brennkraftmaschine zu erfassen und bei geöffneter Kupplungseinrichtung die elektrische Maschine in einen den Verdichter zur Bereitstellung von verdichteter Ladeluft antreibenden Betriebszustand zu versetzen, der zur Zunahme der Drehzahl der Brennkraftmaschine führt bis zur Erreichung eines vorbestimmten Drehzahlbereichs der Brennkraftmaschine und das Motorrad dazu eingerichtet ist, beim Erreichen des Drehzahlbereichs die Kupplungseinrichtung zum Antrieb des Verdichters durch das Antriebsmittel der Brennkraftmaschine zu schließen.

Damit wird erreicht, dass das Motorrad bei einem rein saugmotorischen Betriebszustand, bei dem der Verdichter auch nicht über das Abtriebsmittel der Brennkraftmaschine angetrieben wird und sich die elektrische Maschine in einem ausgeschalteten Zustand befindet, oder beispielsweise im generatorischen Betrieb arbeitet, bei einer Leistungsanforderung durch den Fahrer des Motorrads, der hierzu beispielsweise den Gasdrehgriff des Motorrads öffnet oder weiter öffnet, die elektrische Maschine beispielsweise mittels der Steuervorrichtung in einen Antriebszustand versetzt wird, in welchem sie den Spiralverdichter oder Radialverdichter oder ganz allgemein den Verdichter in eine Ladedruck aufbauende Drehzahl versetzt. Damit steigt auch die Drehzahl der Brennkraftmaschine an, wobei bei dem vorstehend bereits erwähnten Synchronisationspunkt die Kupplungseinrichtung geschlossen werden kann und somit der weitere Antrieb des Verdichters über die Brennkraftmaschine selbst erfolgt, nämlich mittels des Abtriebsmittels der Brennkraftmaschine.

Es ist nach einer Weiterbildung der Erfindung auch vorgesehen, dass das Motorrad dazu eingerichtet ist, die Kupplungseinrichtung zum Antrieb des Verdichters zu steuern derart, dass die Antriebswelle des Verdichters über das Getriebe sowohl von der elektrischen Maschine als auch von der Brennkraftmaschine angetrieben ist. Damit kann die vorstehend bereits erwähnte Situation der maximalen Beschleunigung beziehungsweise der maximalen Leistung der Brennkraftmaschine bereitgestellt werden.

Es ist nach einer Weiterbildung der Erfindung auch vorgesehen, dass das Motorrad dazu eingerichtet ist, die von dem aktuellen Fahrzustand des Motorrads abhängige aktuell benötigte Antriebsleistung der Brennkraftmaschine zu bestimmen und die Kupplungseinrichtung in einen offenen Zustand zu versetzen nach der Feststellung, dass die im saugmotorischen Betrieb der Brennkraftmaschine bereitgestellte aktuelle Antriebsleistung ausreichend ist für die Aufrechterhaltung des aktuellen Fahrzustands.

Damit kann die Effizienz des Motorrads erhöht werden, da von der Brennkraftmaschine keine Antriebsleistung mehr für die Aufrechterhaltung des Betriebs des Verdichters bereitgestellt werden muss, was zudem dazu beiträgt, dass die Reibungsleistung der Brennkraftmaschine reduziert wird.

Es ist nach einer Weiterbildung der Erfindung auch vorgesehen, dass die Kupplungseinrichtung eine insbesondere elektromotorisch oder elektromagnetisch schaltbare Kupplungseinrichtung ist. Die Kupplungseinrichtung oder Kupplung muss nur die Funktion des Öffnens und Schließens erfüllen, sodass beispielsweise keine Betriebsweise der langsamen Drehzahlanpassung der angetriebenen und abgetriebenen Seite der Kupplung notwendig ist, also kein, einem Schleifen einer Reibungskupplung zur Drehzahlanpassung entsprechender Betriebszustand benötigt wird.

Die Funktion der Drehzahlanpassung oder Drehzahlsynchronisierung kann von der elektrischen Maschine bereitgestellt werden, welche hierzu beispielsweise von der Steuervorrichtung des Motorrads entsprechend angesteuert wird. Die Kupplung kann also vorzugsweise als elektromagnetisch betätigte Kupplung ausgeführt werden, sodass zusätzliche Bauteile zur Kraft-Weg-Steuerung, wie sie bei einer Reibungskupplung benötigt werden, nicht notwendig, aber möglich sind.

Es ist daher nach einer Weiterbildung der Erfindung auch vorgesehen, dass die Steuervorrichtung dazu eingerichtet ist, die Kupplungseinrichtung zum Öffnen und Schließen anzusteuern, um die vorstehend beschriebene Betätigung der Kupplung zur Herbeiführung einer offenen oder geöffneten und einer geschlossenen Stellung zu realisieren.

Schließlich ist nach der Erfindung auch ein Motorrad vorgesehen, wie dies vorstehend beschrieben wurde, welches ein Vorderrad und ein Hinterrad und einen Fahrersattel aufweist.

Die Erfindung wird im Folgenden anhand der Zeichnung näher erläutert. Diese zeigt in:
Fig. 1 eine schematische Darstellung eines Motorrads 1 gemäß einer Ausführungsform der vorliegenden Erfindung;
Fig. 2 eine schematische Darstellung einer Aufladevorrichtung des Motorrads nach Fig. 1, wobei sich die Aufladevorrichtung in einem ersten Betriebszustand befindet;
Fig. 3 eine Darstellung ähnlich derjenigen nach Fig. 2, wobei sich die Aufladevorrichtung in einem zweiten Betriebszustand befindet;
Fig. 4 eine Darstellung ähnlich derjenigen nach Fig. 2, wobei sich die Aufladevorrichtung in einem dritten Betriebszustand befindet; und
Fig. 5 ein Diagramm, welches die Verdichterdrehzahl aufgetragen über der Motordrehzahl der Brennkraftmaschine zeigt.

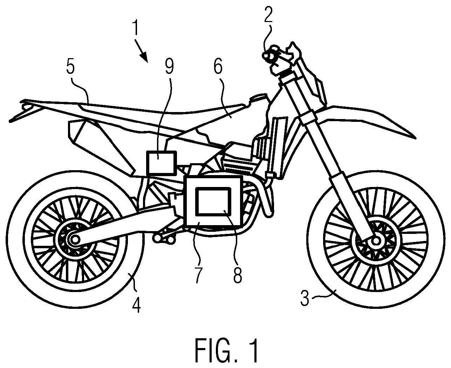

Fig. 1 der Zeichnung zeigt eine schematische Darstellung eines Motorrads 1 gemäß einer Ausführungsform der vorliegenden Erfindung.

Das Motorrad 1 weist ein Vorderrad 3 und ein Hinterrad 4 auf und besitzt einen Fahrersattel 5 sowie unter anderem auch einen Kraftstofftank 6 sowie einen Gasdrehgriff 2.

Darüber hinaus besitzt das Motorrad eine schematisch dargestellte Brennkraftmaschine 7 mit einer ebenfalls schematisch dargestellten Aufladevorrichtung 8 und eine ebenfalls schematisch dargestellte Steuervorrichtung 9.

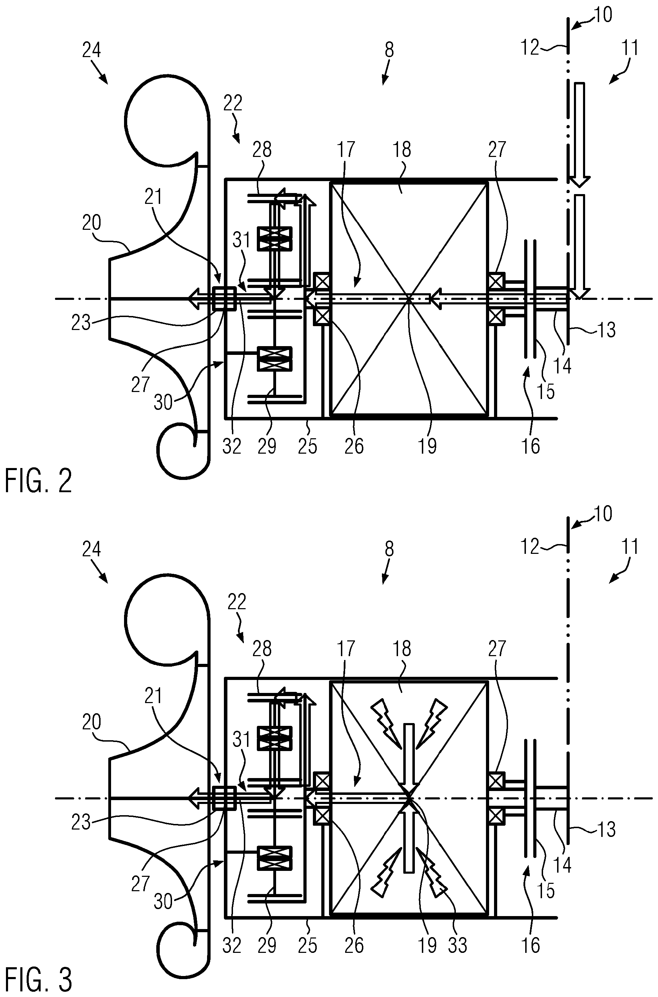

Die Aufladevorrichtung 8 ist näher anhand von Fig. 2 bis Fig. 4 der Zeichnung ersichtlich.

Die Brennkraftmaschine 7 besitzt ein anhand von beispielsweise Fig. 2 der Zeichnung ersichtliches Abtriebsmittel 10, welches bei der dargestellten Ausführungsform als Kettentrieb 11 dargestellt ist mit einer Kette 12, bei der es sich beispielsweise um eine Zahnkette handeln kann, die von einem nicht näher dargestellten Kettenritzel angetrieben wird, welches an einem Abtriebselement der Brennkraftmaschine 7 angeordnet sein kann, beispielsweise also an einer Ausgangswelle oder auch an der Kurbelwelle der Brennkraftmaschine 7 drehfest angeordnet sein kann.

Die so von der Brennkraftmaschine 7 angetriebene Kette 12 läuft über ein Kettenrad 13, welches an einem Wellensegment 14 oder einer Welle 14 drehfest angeordnet ist. Die so mittels der Kette 12 übertragene Drehkraft wird mittels der Welle 14 in ein Eingangselement 15 eine schaltbaren Kupplungseinrichtung 16 eingeleitet, die zwischen dem Abtriebsmittel 10 und einem Getriebeeingang 17 angeordnet ist.

Die Kupplungseinrichtung 16 ist in der Fig. 2 der Zeichnung in einer geschlossenen Stellung dargestellt, während Fig. 3 der Zeichnung die Kupplungseinrichtung 16 in einer offenen oder geöffneten Stellung zeigt.

**In** der geschlossenen Stellung der Kupplungseinrichtung 16 nach Fig. 2 überträgt diese eine Drehkraft in den oder auf den Getriebeeingang 17 und in der geöffneten oder offenen Stellung der Kupplungseinrichtung 16 ist die Übertragung der Drehkraft vom Abtriebsmittel 10 auf den Getriebeeingang 17 unterbrochen.

Fig. 2 der Zeichnung zeigt darüber hinaus, dass die Aufladevorrichtung 8 eine elektrische Maschine 18 oder einen Elektromotor 18 aufweist, der bei der dargestellten Ausführungsform auf dem sich bis zur elektrischen Maschine 18 erstreckenden Abschnitt 19 der Getriebeeingangswelle 26 drehfest angeordnet ist. Alternativ hierzu kann die elektrische Maschine 18 auch an einer Verdichterwelle oder Verdichterantriebswelle 21 des Verdichters 20 drehfest angeordnet sein.

Bei dem in den Zeichnungen dargestellten Getriebe 22 handelt es sich um ein Planetengetriebe 22, da mit diesem in vorteilhafter Weise eine sehr gute Lösung im Sinne des benötigten Bauraums, des damit einhergehenden Gewichts und der Kosten gegeben ist und darüber hinaus das Planetengetriebe 22 auch aufgrund seiner hohen Drehzahlspreizung dazu in der Lage ist, die Eingangsdrehzahl des Getriebeeingangs 17 in eine sehr hohe Ausgangsdrehzahl des Getriebeausgangs 23 zu übersetzen.

Bei der dargestellten Ausführungsform der Aufladevorrichtung 8 ist der Getriebeausgang 23 drehfest mit der Verdichterantriebswelle 21 gekoppelt.

Bei dem Verdichter 20 handelt es sich bei der dargestellten Ausführungsform um einen Spiralverdichter 24, wobei nach der Erfindung auch ein Verdichter einer anderen Bauart zum Einsatz kommen kann. Der Spiralverdichter besitzt den Vorteil einer kostengünstigen Ausführung und darüber hinaus auch den Vorteil eines relativ geringen Rotationsträgkeitsmoments, das Laufzeug des Spiralverdichters 24 mit den nicht näher dargestellten Schaufeln kann daher in kurzer Zeit auf hohe Drehzahlen beschleunigt werden.

Wie es anhand von Fig. 2 bis Fig. 4 der Zeichnung ersichtlich ist, ist die Aufladevorrichtung 8 platzsparend in einem Gehäuse 25 angeordnet, welches nur wenig Bauraum benötigt und daher zur Anordnung an dem Motorrad 1 nach Fig. 1 ausgebildet ist.

Bei dem in Fig. 2 der Zeichnung dargestellten Betriebszustand der Kupplungseinrichtung 16 ist diese zur Übertragung von Drehkraft vom Abtriebsmittel 10 auf den Getriebeeingang 17 geschlossen und die Getriebeeingangswelle 26, welche mittels zweier Lager 27 im Gehäuse 25 gelagert ist, wird in diesem Betriebszustand, der einem ersten Lastpfad entspricht, über die Brennkraftmaschine 7 angetrieben und zwar mittels des Abtriebsmittels 10.

In diesem ersten Betriebszustand ist die Kupplungseinrichtung 16 also geschlossen und die Antriebswelle 21 des Verdichters 20 wird über das Planetengetriebe 22 mittels des Abtriebsmittels 10 der Brennkraftmaschine angetrieben. Auf diese Weise wird im nicht näher dargestellten Ansaugtrakt der Brennkraftmaschine 7 unter Druck gesetzte Ladeluft bereitgestellt, welche der Brennkraftmaschine zur Verbrennung mit Kraftstoff aus dem Kraftstofftank 6 zur Verfügung gestellt wird, der beispielsweise mittels eines nicht näher dargestellten Einspritzsystems der Brennkraftmaschine 7 bereitgestellt wird.

In dem ersten Betriebszustand treibt also die Brennkraftmaschine 7 über die geschlossene Kupplungseinrichtung 16 die Getriebeeingangswelle 26 mit einer ersten Drehzahl an, welche vom Planetengetriebe 22, welches ein Hohlrad 28 und ein Planetenrad 29 sowie einen Planetenträger 30 und ein Sonnenrad 31 aufweist, in eine wesentlich höhere zweite Drehzahl übersetzt wird und über den Getriebeausgang 23, welcher die Getriebeausgangswelle 32 aufweist auf die Verdichterantriebswelle 21 übertragen, sodass der Spiralverdichter 24 unter Druck gesetzte Ladeluft im Ansaugtrakt der Brennkraftmaschine 7 bereitstellen kann.

In dem in Fig. 3 der Zeichnung dargestellten zweiten Betriebszustand ist die Kupplungseinrichtung 16 geöffnet, wobei die Öffnung der Kupplungseinrichtung beispielsweise mittels der Steuervorrichtung 9 herbeigeführt werden kann, welche ein Schaltelement der beispielsweise elektrisch schaltbaren Kupplungseinrichtung 16 zum Öffnen der Kupplungseinrichtung betätigt.

In diesem zweiten Betriebszustand wird keine Drehkraft über die Kupplungseinrichtung 16 auf das Planetengetriebe 22 übertragen. In dem zweiten Betriebszustand ist die Kupplungseinrichtung geöffnet und die Antriebswelle des Verdichters 20 wird mittels der elektrischen Maschine 18 angetrieben, wie dies anhand der stilisiert dargestellten Strompfeile 33 in Fig. 3 der Zeichnung ersichtlich ist. Das Motorrad 1 ist also dazu eingerichtet, die Brennkraftmaschine 7 mit von dem Verdichter 20 unter Druck gesetzter Ladeluft zu versorgen.

Befindet sich die Brennkraftmaschine 7 in einem niedrigen Drehzahlbereich, wobei sich dieser niedrige Drehzahlbereich dadurch auszeichnet, dass die Brennkraftmaschine 7 im reinen saugmotorischen Betrieb betrieben wird, vom Verdichter 20 also keine Ladeluft bereitgestellt wird, oder sich auch dadurch auszeichnet, dass die Kupplungseinrichtung 16 zwar geschlossen ist, die Drehzahl des Verdichters 20 aber mittels der Steuervorrichtung 9 so eingestellt wird, dass ein geringer Massenstrom an Ladeluft oder nur Ladeluft mit niedrigem Druckniveau bereitgestellt wird, kann die Situation eintreten, dass der Fahrer des Motorrads 1 beispielsweise einen Überholvorgang durchführen möchte.

Der Fahrer leitet den Überholvorgang dadurch ein, dass er den Gasdrehgriff 2 am Motorrad 1 so betätigt, dass die Steuervorrichtung 9 daraus einen Fahrerwunsch ableiten kann, der eine höhere Leistung der Brennkraftmaschine 7 erfordert als diese im vorherigen Betriebszustand, also vor der öffnenden Betätigung des Gasdrehgriffes 2 durch den Fahrer des Motorrads bereitgestellt hat.

Der Fahrerwunsch kann beispielsweise anhand einer Überwachung des Öffnungswinkel oder Drehwinkels des Gasdrehgriffes 2 des Motorrads 1 festgestellt werden oder auch über eine Überwachung der Geschwindigkeit der Öffnungsbetätigung des Gasdrehgriffes 2 durch den Fahrer des Motorrads.

Die Steuervorrichtung 9 steuert dann die Kupplungseinrichtung 16, sofern diese sich in einem geschlossenen Zustand befunden hat, so an, dass diese Kupplungseinrichtung 16 geöffnet wird und nachdem festgestellt wurde, dass sich die Kupplungseinrichtung 16 im geöffneten Zustand befindet, steuert die Steuervorrichtung 9 die elektrische Maschine 18 so an, dass diese bestromt wird und die Getriebeeingangswelle 26 in sehr kurzer Zeit zur Einnahme einer erhöhten Drehzahl beschleunigt wird.

Diese Bestromung des Elektromotors oder der elektrischen Maschine 18 führt also dazu, dass die Getriebeausgangswelle 32 und damit die Antriebswelle 21 des Verdichters 24 aufgrund des hohen Übersetzungsverhältnis des Planetengetriebes 22 in sehr kurzer Zeit in eine sehr hohe Drehzahl versetzt wird und damit der Spiralverdichter 24 im Ansaugtrakt der Brennkraftmaschine 7 unter hohem Ladedruck gesetzte Ladeluft bereitstellt, sodass die von der Brennkraftmaschine 7 bereitgestellte Antriebsleistung in kurzer Zeit erhöht wird und somit dem Fahrerwunsch nach erhöhter Antriebsleistung des Motorrads Rechnung getragen wird. Durch die Bestromung des Elektromotors 18 wird also die Drehzahl der Getriebeeingangswelle 26 in kurzer Zeit wesentlich erhöht und zwar zu einer Drehzahl, welche höher ist als die Drehzahl der Getriebeeingangswelle 26 in dem von der Brennkraftmaschine 7 angetriebenen Zustand der Getriebeeingangswelle 26.

Wenn die Kupplungseinrichtung 16 vor der Erfassung des Fahrerwunsches nach erhöhter Motorleistung geschlossen war, hat sich die Getriebeeingangswelle 26 also mit einer niedrigeren Drehzahl gedreht als die Drehzahl der Getriebeeingangswelle 26 nach dem Öffnen der Kupplungseinrichtung 16 und der Beschleunigung der Getriebeeingangswelle 26 durch die Bestromung der elektrischen Maschine 18. Die Bestromung der elektrischen Maschine 18 führt also dazu, dass die Drehzahl der Getriebeeingangswelle 26 die sich aufgrund der Drehbetätigung der Getriebeeingangswelle 26 durch die Brennkraftmaschine 7 einstellende Drehzahl überholt.

Die Brennkraftmaschine 7 wird also für den Überholvorgang mit Ladedruck entsprechend dem spezifischen Bedarf der Brennkraftmaschine 7 versorgt, die Brennkraftmaschine 7 erzeugt mehr Antriebsleistung und der Überholvorgang wird dynamischer.

Der Anstieg der Antriebsleistung der Brennkraftmaschine 7 führt auch zu einem Anstieg der Drehzahl der Brennkraftmaschine 7, also beispielsweise der Kurbelwelle der Brennkraftmaschine, auf der ein nicht näher dargestelltes Kettenritzel des Kettentriebs 11 angeordnet ist. Damit steigt also auch die Drehzahl des Eingangselements 15 der Kupplungseinrichtung 16.

Der zweite Betriebszustand mit geöffneter Kupplungseinrichtung kann also bei steigender Drehzahl der Brennkraftmaschine 7 beibehalten werden bis zu einer vorbestimmten Drehzahl der Brennkraftmaschine, nach deren Erreichung die Kupplungseinrichtung geschlossen wird und es möglich ist, die elektrische Maschine 18 in einen sich von einem zum Antrieb des Verdichters 20 eingerichteten Betriebszustand unterscheidenden Betriebszustand zu versetzen.

Wenn die Lastanforderung durch den Benutzer des Motorrads durch die Betätigung des Gasdrehgriffes 2 festgestellt wird, wird also der Verdichter 20 durch eine Bestromung der elektrischen Maschine 18 in eine hohe Drehzahlzunahme versetzt, der Ladedruck steigt. Die Brennkraftmaschine 7 liefert daraufhin mehr Antriebsleistung, das Motorrad 1 wird beschleunigt. Gleichzeitig steigt die Drehzahl der Brennkraftmaschine an und zwar bis zu einem Synchronisationspunkt, an dem der mechanische Antrieb des Verdichters 20 mittels des Abtriebsmittels 10 und geschlossener Kupplungseinrichtung 16 denselben Ladedruck liefert. Zu diesem Zeitpunkt kann also die Kupplungseinrichtung 16 geschlossen werden und der elektrische Antrieb des Verdichters 20 mittels des Elektromotors 18 oder der elektrischen Maschine 18 deaktiviert werden. Es ist also möglich, die elektrische Maschine 18 abzuschalten oder auch in einen generatorischen Betrieb zu schalten, um beispielsweise über das Bordspannungsnetz des Motorrads 1 eine im Bordspannungsnetz befindliche Batterie des Motorrads zu laden, sofern der Ladezustand der Batterie dies erfordert.

Das Motorrad 1 ist also dazu eingerichtet, die elektrische Maschine 18 in einen Betriebszustand zu versetzen, in dem sie den Verdichter 20 zur Bereitstellung von verdichteter Ladeluft antreibt oder in einen generatorischen Betriebszustand zu versetzen in dem sie ein Bordspannungsnetz des Motorrads mit elektrischer Energie versorgt oder auch in einen Betriebszustand zu versetzen, in dem sie Antriebsleistung zum Betrieb des Motorrads bereitstellt.

Die elektrische Maschine 18 kann also auch bei geschlossener Kupplungseinrichtung 16 motorisch betrieben werden, die für den Antrieb des Verdichters 20 benötigte Antriebsleistung der Brennkraftmaschine 7 sinkt dadurch und dies führt dazu, dass die nicht mehr benötigte Antriebsleistung der Brennkraftmaschine 7 zum Antrieb des Verdichters 20 dem Vortrieb des Motorrads 1 zur Verfügung steht, also dadurch eine Maximalleistungssituation erreicht wird, mit der gleichzeitig eine maximale Beschleunigung des Motorrads 1 erreicht werden kann. Dabei gibt sowohl die Brennkraftmaschine 7 als auch die elektrische Maschine 18 Leistung ab.

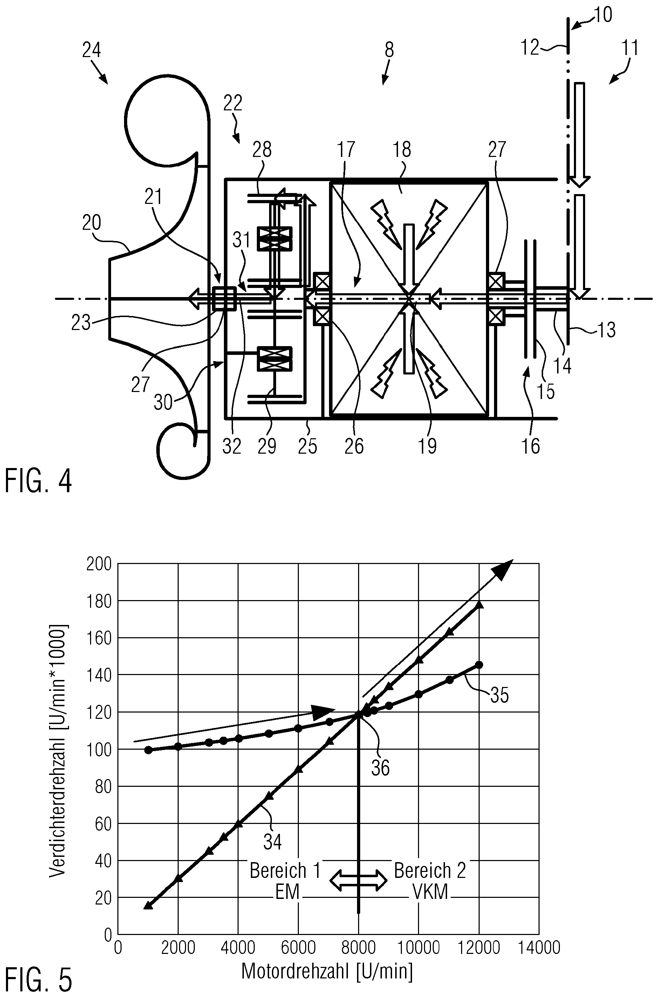

Fig. 4 der Zeichnung zeigt diesen Betriebszustand, indem die Kupplungseinrichtung 16 geschlossen ist, also Antriebsleistung der Brennkraftmaschine 7 über das Abtriebsmittel 10 auf den Getriebeeingang 17 und damit auf den Spiralverdichter 24 übertragen wird und auch Antriebsleistung über die elektrische Maschine 18 auf den Getriebeeingang 17 übertragen wird, es kann damit also eine Boost Funktion oder Overboost Funktion realisiert werden.

Fig. 5 der Zeichnung zeigt ein Diagramm, welches die Verdichterdrehzahl aufgetragen über der Motordrehzahl der Brennkraftmaschine 7 zeigt.

Die gerade Linie 34 zeigt ein festes Drehzahlverhältnis an zwischen der Motordrehzahl und der Verdichterdrehzahl.

Dargestellt ist ein Diagramm, welches den Hochlauf der Brennkraftmaschine 7 unter Volllast zeigt. In dem mit "Bereich 1 EM" bezeichneten Bereich wird die elektrische Maschine 18 bestromt, um entlang der Kurve 35, die den Drehzahlbedarf des Verdichters 20 aufgetragen über der Motordrehzahl der Brennkraftmaschine 7 zeigt, den Verdichter 20 zu beschleunigen, sodass dieser einen Drehzahlanstieg in der dargestellten Ausführungsform von 100000 Umdrehungen bis etwa 118100 Umdrehungen erfährt.

Der Schnittpunkt 36 zeigt den Drehzahlbereich der Brennkraftmaschine 7 von etwa 8000 Umdrehungen/min an, an dem der Antrieb des Verdichters 24 über das Getriebe 22, welches vom Abtriebsmittel 10 der Brennkraftmaschine 7 angetrieben wird, genügend Ladeluft beziehungsweise Ladedruck bereitstellt und somit die elektrisch betätigte oder betätigbare oder elektrische Kupplungseinrichtung 16 geschlossen werden kann und somit die elektrische Maschine 18 abgeschaltet werden kann oder beispielsweise in einen generatorischen Betrieb geschaltet werden kann zur Bereitstellung von Ladestrom für die Fahrzeugbatterie des Motorrads 1. Dieser Bereich ist in dem Diagramm nach Fig. 5 als "Bereich 2 VKM" bezeichnet.

Das erfindungsgemäße Motorrad mit einer Brennkraftmaschine zeichnet sich durch eine Aufladevorrichtung für die Brennkraftmaschine aus, welche einerseits von der Brennkraftmaschine selbst mittels eines mechanischen Abtriebs der Brennkraftmaschine angetrieben werden kann und andererseits auch von einer elektrischen Maschine angetrieben werden kann oder von beiden Antriebseinrichtungen gleichzeitig angetrieben werden kann. Die Aufladevorrichtung weist einen mechanisch angetriebenen Verdichter in der Form beispielsweise einer Spiralverdichtereinheit auf, die einem Getriebe nachgeschaltet ist, dessen Eingangsseite von der oben genannten Brennkraftmaschine und/oder der elektrischen Maschine angetrieben wird, wobei das Getriebe die Eingangsdrehzahl des Getriebes in eine hohe Ausgangsdrehzahl übersetzt, mit der dann der mechanisch angetriebene Verdichter direkt angetrieben wird.

Wird das Motorrad in einem Teillastbereich der Brennkraftmaschine betrieben, kann die Brennkraftmaschine den Verdichter mittels der geschlossenen Kupplungseinrichtung antreiben. Die Antriebsdrehzahl der Eingangsseite des vorzugsweise verwendeten Planetengetriebes wird vom Planetengetriebe hoch skaliert zu einer Ausgangsdrehzahl übersetzt, mit der dann die Verdichterwelle des mechanischen Verdichters angetrieben wird. Der Verdichter liefert entsprechend seiner Drehzahl die verdichtete Ladeluft, welche der Brennkraftmaschine zur Verfügung gestellt wird.

Befindet sich die Brennkraftmaschine in einem niedrigen Drehzahlbereich und der Fahrer des Motorrads möchte beispielsweise einen Überholvorgang durchführen, dann betätigt der Fahrer üblicherweise den Gasdrehgriff an der Lenkstange des Motorrads, was von der Steuervorrichtung erfasst wird. Die Steuervorrichtung kann dann die geschlossene Kupplungseinrichtung öffnen und gleichzeitig die elektrische Maschine mit Strom versorgen, welche dann die Eingangsdrehzahl der Getriebeeingangswelle beschleunigt und in eine höhere Eingangsdrehzahl versetzt. Diese Eingangsdrehzahl des Getriebes wird von dem Planetengetriebe hoch skaliert in eine wesentlich höhere Ausgangsdrehzahl an der Getriebeausgangsseite übersetzt, welche direkt in die Verdichterantriebswelle eingeleitet wird. In diesem Betriebszustand treibt also die elektrische Maschine den Verdichter an und zwar in einer solchen Weise, dass die von der elektrischen Maschine herbeigeführte Drehzahl der Getriebeeingangswelle höher ist als die vor der Beaufschlagung der Getriebeeingangswelle mit der Brennkraftmaschine herrschende Drehzahl der Getriebeeingangswelle. Der Verdichter liefert der Brennkraftmaschine ihrem Bedarf entsprechend Ladedruck, die Brennkraftmaschine erzeugt höhere Leistung und der vom Fahrer des Motorrads gewünschte Überholvorgang wird dynamischer.

Gleichzeitig steigt dabei die Drehzahl der Kurbelwelle der Brennkraftmaschine an und der Drehzahlanstieg kann bis zu einem Drehzahlbereich erfolgen, an dem Drehzahlgleichheit der Kurbelwelle der Brennkraftmaschine oder eines von der Brennkraftmaschine angetriebenen Abtriebsmittels mit einem Ausgangselement, welches die Getriebeeingangswelle beaufschlagt. Wenn sich diese Drehzahlgleichheit einstellt, kann die Kupplungseinrichtung geschlossen werden und der Antrieb des Verdichters kann dann über die Brennkraftmaschine mittels des Abtriebsmittels erfolgen und die elektrische Maschine kann in einen anderen Betriebsmodus geschaltet werden oder abgeschaltet werden. Der andere Betriebsmodus kann beispielsweise ein generatorischen Betrieb sein oder auch ein Boost Modus, bei dem die elektrische Maschine die Getriebeeingangswelle weiter zur Drehung beaufschlagt und somit den Verdichter antreibt oder zusammen mit der Brennkraftmaschine mit antreibt. Damit wird die von der Brennkraftmaschine zum Antrieb des Verdichters geleistete Antriebsarbeit reduziert, die Brennkraftmaschine kann mehr Leistung für den Vortrieb des Motorrads bereitstellen.

In einem Modus oder Betriebszustand mit geschlossener Kupplungseinrichtung kann die mit der Verdichterantriebswelle gekoppelte elektrische Maschine auch generatorisch betrieben werden, um das Bordspannungsnetz des Motorrads mit elektrischer Energie zu versorgen und beispielsweise die Motorradbatterie zu laden.

In einem Betriebszustand des Motorrads, bei dem die Brennkraftmaschine bei geringer Drehzahl und geringer Last arbeiten kann und ein saugmotorischer Betrieb der Brennkraftmaschine ausreichend Leistung zur Verfügung stellt, ist es von Vorteil, die Kupplungseinrichtung zu öffnen. Damit steht der Verdichter still und erfährt keine Antriebsleistung. Dies senkt auch die Gesamtreibungsleistung der Brennkraftmaschine, der Kraftstoffverbrauch der Brennkraftmaschine wird verringert. Erfolgt in einem solchen Betriebszustand durch die Betätigung des Gasdrehgriffes durch den Fahrer eine Lastanforderung, dann wird der Verdichter mittels der elektrischen Maschine hoch beschleunigt, um Ladedruck aufzubauen, dies kann bis zu dem vorstehend bereits erwähnten Synchronisationspunkt erfolgen, an dem der mechanische Antrieb des Verdichters denselben Ladedruck liefert, den er elektrisch betätigt liefert, der elektrische Antrieb kann deaktiviert werden oder in einen generatorischen Betrieb geschaltet werden.

Die elektrische Maschine kann bei geschlossener Kupplungseinrichtung auch motorisch betrieben werden, was die Antriebsleistung der Brennkraftmaschine für den Verdichter reduziert, es kann mehr Antriebsleistung der Brennkraftmaschine für die Beschleunigung des Motorrads bereitgestellt werden, es wird maximale Beschleunigung erreicht.

Obwohl vorstehend ein Planetengetriebe als Ausführungsform des Getriebes genannt wurde, ist es auch möglich ein Stufengetriebe in der Form beispielsweise eines Stirnradgetriebes mit mehreren Übersetzungsstufen vorzusehen. Es ist nur erforderlich, dass die zum Betrieb des Verdichters benötigte Drehzahlspreizung des Getriebes bereitgestellt wird.

Die Kupplungseinrichtung ist vorzugsweise eine elektrisch schaltbare, also beispielsweise elektromagnetisch betätigbare Kupplung, wie sie beispielsweise in der Anwendung von schaltbaren Klimakompressoren bekannt ist.

Die von der Brennkraftmaschine bereitgestellte Antriebsleistung hängt unmittelbar vom zur Verfügung stehenden Ladedruck ab. Ein Motorsteuergerät, bei dem es sich beispielsweise um die vorstehend erwähnte Steuervorrichtung handeln kann, ermittelt aus Sensorwerten, welche beispielsweise mittels Sensoren, die die Drehzahl der Brennkraftmaschine, dem im Ansaugluftbereich der Brennkraftmaschine herrschenden Druck und der Temperatur, dem im Brennraum der Brennkraftmaschine und/oder im Abgasstrang der Brennkraftmaschine herrschenden Druck und/oder der Temperatur entsprechen, und dem Fahrerwunsch, der beispielsweise durch die Drehwinkelstellung des Gasdrehgriffes des Motorrads erfasst werden kann, den erforderlichen Ladedruck für die gewünschte Sollmotorleistung. Es findet also eine last- und drehzahlabhängige Regelung statt. Andere Parameter, wie beispielsweise der Ladezustand der Motorradbatterie werden ebenfalls erfasst und beispielsweise zur Entscheidung herangezogen, ob und wie lange die elektrische Maschine in generatorischen Betrieb versetzt wird.

Wenn die elektrische Maschine in den generatorischen Betrieb versetzt werden soll, wird zum Antrieb der generatorisch betriebenen elektrischen Maschine Antriebsleistung der Brennkraftmaschine benötigt. In einem solchen Fall kann die Antriebsleistung der Brennkraftmaschine um den Betrag an Antriebsleistung, der zum generatorischen Betrieb der elektrischen Maschine benötigt wird, erhöht werden.

Damit wird für den Fahrer des Motorrads wahrnehmbar die Antriebsleistung der Brennkraftmaschine nicht verringert. In einem Fahrzustand des Motorrads, bei dem die von der Brennkraftmaschine saugmotorisch, also ohne Aufladung bereitgestellte Antriebsleistung ausreichend ist, steht der Verdichter still und auch die elektrische Maschine befindet sich in einem abgeschalteten Zustand. Wenn in einem solchen Zustand die Motorradbatterie geladen werden soll, kann nach Drehzahlsynchronisation zwischen der Eingangsseite und der Ausgangsseite der Kupplungseinrichtung die Kupplungseinrichtung geschlossen und die elektrische Maschine generatorisch betrieben werden.

In der Startphase einer Brennkraftmaschine, welche noch nicht eine ausreichende Temperatur zur Abgasnachbehandlung im Abgasstrang erreicht hat, sind sogenannte Sekundärluftsysteme zur unterstützenden Abgasnachbehandlung von Vorteil. Solche Sekundärluftsysteme verwenden üblicherweise einen elektrisch betriebenen Luftförderer, der Luft in den Abgasstrang befördert.

Das erfindungsgemäße Motorrad zeichnet sich auch dadurch aus, dass die Aufladevorrichtung dazu eingesetzt werden kann, in einem solchen Betriebszustand nach dem Start der Brennkraftmaschine mittels der elektrischen Maschine mehr Luft zu fördern als dies für den Betrieb der Brennkraftmaschine benötigt wird. Dieser Luftüberschuss kann unter Zuhilfenahme eines Regelventils dem Abgasstrang zur Abgasnachbehandlung zugeführt werden.

Das erfindungsgemäße Motorrad zeichnet sich dadurch aus, dass es möglich ist, im Teillastbereich die Reibungsverluste und Ladungswechselverluste zu reduzieren.

Da der Verdichter sowohl mechanisch als auch elektrisch angetrieben werden kann, kann die von der Brennkraftmaschine bereitgestellte Drehmomentkurve weitgehend frei ausgestaltet werden. Auch ist es möglich, dass die Steuervorrichtung fahrprogrammabhängige Drehmomentkurven bereitstellt. Der Verdichter kann mittels der Kupplungseinrichtung in den Stillstandsmodus versetzt werden, also weder von der Brennkraftmaschine noch von der elektrischen Maschine angetrieben werden, dies führt zur Reduzierung des von der Brennkraftmaschine beziehungsweise vom Motorrad benötigten Kraftstoffs.

Über einen generatorischen Betrieb der elektrischen Maschine kann das Bordspannungsnetz des Motorrads gespeist werden, ein zusätzlicher Generator zum Laden des Bordspannungsnetzes wird nicht mehr benötigt.

Verglichen mit einem rein elektrischen Betrieb des Verdichters besitzt das erfindungsgemäße Motorrad den Vorteil, dass der Verdichter wahlweise von der Brennkraftmaschine angetrieben werden kann und somit die Motorradbatterie verglichen mit einem System, bei dem der Verdichter nur elektrisch angetrieben wird, mit wesentlich kleinerer Kapazität ausgelegt werden kann und damit auch ein Gewichtsvorteil des Motorrads erreicht wird.

Hinsichtlich vorstehend im Einzelnen nicht näher erläuterter Merkmale der Erfindung wird im Übrigen ausdrücklich auf die Patentansprüche und die Zeichnung verwiesen.

### Bezugszeichenliste

1. Motorrad
2. Gasdrehgriff
3. Vorderrad
4. Hinterrad
5. Fahrersattel
6. Kraftstofftank
7. Brennkraftmaschine
8. Aufladevorrichtung
9. Steuervorrichtung
10. Abtriebsmittel
11. Kettentrieb
12. Kette
13. Kettenrad
14. Wellensegment, Welle
15. Eingangselement
16. Schaltbare Kupplungseinrichtung
17. Getriebeeingang
18. Elektrische Maschine, Elektromotor
19. Abschnitt
20. Verdichter
21. Verdichterantriebswelle
22. Planetengetriebe, Getriebe
23. Getriebeausgang
24. Spiralverdichter
25. Gehäuse
26. Getriebeeingangswelle
27. Lager
28. Hohlrad
29. Planetenrad
30. Planetenträger
31. Sonnenrad
32. Getriebeausgangswelle
33. Strompfeile
34. Gerade Linie
35. Kurve
36. Schnittpunkt

## Patentansprüche

1. Motorrad (1) mit einer Brennkraftmaschine (7) mit einem Abtriebsmittel (10) und mit einer Aufladevorrichtung (8) für die Brennkraftmaschine (7) sowie einer Steuervorrichtung (9) und einer elektrischen Maschine (18), wobei die Aufladevorrichtung (8) einen Verdichter (20) mit einer Antriebswelle (21) besitzt und ein Getriebe (22) mit einem Getriebeeingang (17) und einem Getriebeausgang (23) aufweist, und der Verdichter (20) mittels der Antriebswelle (21) mit dem Getriebeausgang (23) kraftschlüssig gekoppelt ist, und der Getriebeeingang (17) mittels der elektrischen Maschine (18) und/oder dem Abtriebsmittel (10) antreibbar ist, wobei zwischen dem Abtriebsmittel (10) der Brennkraftmaschine (7) und dem Getriebeeingang (17) eine schaltbare Kupplungseinrichtung (16) vorgesehen ist, **dadurch gekennzeichnet, dass** das Motorrad (1) dazu eingerichtet ist, eine von einem Benutzer des Motorrads (1) ausgelöste erhöhte Leistungsanforderung der Brennkraftmaschine (7) zu erfassen und bei geöffneter Kupplungseinrichtung (16) die elektrische Maschine (18) in einen den Verdichter (20) zur Bereitstellung von verdichteter Ladeluft antreibenden Betriebszustand zu versetzen, der zur Zunahme der Drehzahl der Brennkraftmaschine (7) führt bis zur Erreichung eines vorbestimmten Drehzahlbereichs der Brennkraftkraftmaschine (7) und das Motorrad (1) dazu eingerichtet ist, beim Erreichen des Drehzahlbereichs die Kupplungseinrichtung (16) zum Antrieb des Verdichters (20) durch das Abtriebsmittel (10) der Brennkraftmaschine (7) zu schließen.

2. Motorrad (1) nach Anspruch 1, **dadurch gekennzeichnet, dass** das Getriebe (22) ein Stirnradgetriebe mit einer Mehrzahl an Übersetzungsstufen oder ein Planetengetriebe (22) ist.

3. Motorrad (1) nach Anspruch 1 oder 2, **dadurch gekennzeichnet, dass** das Abtriebsmittel (10) eine Zugmittelstufe oder eine Zahnradstufe ist.

4. Motorrad (1) nach einem der vorstehenden Ansprüche, **dadurch gekennzeichnet, dass** der Getriebeeingang (17) eine Getriebeeingangswelle (26) aufweist und die elektrische Maschine (18) mit der Getriebeeingangswelle (26) drehfest gekoppelt ist.

5. Motorrad (1) nach einem der vorstehenden Ansprüche, **dadurch gekennzeichnet, dass** in einem ersten Betriebszustand die Kupplungseinrichtung (16) geschlossen ist und die Antriebswelle (21) des Verdichters (20) über das Getriebe (22) mittels des Abtriebsmittels (10) der Brennkraftmaschine (7) angetrieben ist und das Motorrad (1) dazu eingerichtet ist, die Brennkraftmaschine (7) mit von dem Verdichter (20) unter Druck gesetzter Ladeluft zu versorgen.

6. Motorrad (1) nach einem der vorstehenden Ansprüche, **dadurch gekennzeichnet, dass** in einem zweiten Betriebszustand die Kupplungseinrichtung (16) geöffnet ist und die Antriebswelle (21) des Verdichters (20) mittels der elektrischen Maschine (18) angetrieben ist und das Motorrad (1) dazu eingerichtet ist, die Brennkraftmaschine (7) mit von dem Verdichter (20) unter Druck gesetzter Ladeluft zu versorgen.

7. Motorrad (1) nach Anspruch 6, **dadurch gekennzeichnet, dass** das Motorrad (1) dazu eingerichtet ist, den zweiten Betriebszustand mit geöffneter Kupplungseinrichtung (16) bei steigender Drehzahl der Brennkraftmaschine (7) beizubehalten bis zu einer vorbestimmten Drehzahl der Brennkraftmaschine (7), nach deren Erreichung die Kupplungseinrichtung (16) geschlossen wird und die elektrische Maschine (18) in einen sich von einem zum Antrieb des Verdichters (20) eingerichteten Betriebszustand unterscheidenden Betriebszustand versetzt wird.

8. Motorrad (1) nach einem der vorstehenden Ansprüche, **dadurch gekennzeichnet, dass** das Motorrad (1) dazu eingerichtet ist, die elektrische Maschine (18) in einen Betriebszustand zu versetzen, in dem sie den Verdichter (20) zur Bereitstellung von verdichteter Ladeluft antreibt oder in einen generatorischen Betriebszustand zu versetzen, in dem sie ein Bordspannungsnetz des Motorrads (1) mit elektrischer Energie versorgt oder in einen Betriebszustand zu versetzen, in dem sie Antriebsleistung zum Antrieb des Motorrads (1) bereitstellt, die der Antriebsleistung der Brennkraftmaschine zum Antrieb des Motorrads (1) hinzugefügt ist.

9. Motorrad (1) nach einem der vorstehenden Ansprüche, **dadurch gekennzeichnet, dass** das Motorrad (1) dazu eingerichtet ist, bei für den Antrieb des Motorrads (1) ausreichender saugmotorischer Antriebsleistung der Brennkraftmaschine (7) die Kupplungseinrichtung (16) in einen geöffneten Zustand zu versetzen und die elektrische Maschine (18) in einem antriebslosen Zustand zu versetzen.

10. Motorrad (1) nach einem der vorstehenden Ansprüche, **dadurch gekennzeichnet, dass** das Motorrad (1) dazu eingerichtet ist, die Drehzahl der Antriebswelle (21) des Verdichters (20) durch eine Veränderung der Abtriebsdrehzahl des Getriebeausgangs (23) an den Bedarf an Ladeluft der Brennkraftmaschine (7) anzupassen.

11. Motorrad (1) nach einem der vorstehenden Ansprüche, **dadurch gekennzeichnet, dass** das Motorrad (1) dazu eingerichtet ist, die Kupplungseinrichtung (16) zum Antrieb des Verdichters (20) zu steuern derart, dass die Antriebswelle (21) des Verdichters (20) über das Getriebe (22) sowohl von der elektrischen Maschine (18) als auch von der Brennkraftmaschine (7) angetrieben ist.

12. Motorrad (1) nach einem der vorstehenden Ansprüche, **dadurch gekennzeichnet, dass** das Motorrad (1) dazu eingerichtet ist, die von dem aktuellen Fahrzustand des Motorrads (1) abhängige aktuell benötigte Antriebsleistung der Brennkraftmaschine (7) zu bestimmen und die Kupplungseinrichtung (16) in einen offenen Zustand zu versetzen nach Feststellung, dass die im saugmotorischen Betrieb der Brennkraftmaschine (7) bereit gestellte aktuelle Antriebsleistung ausreichend ist.

13. Motorrad (1) nach einem der vorstehenden Ansprüche, **dadurch gekennzeichnet, dass** die Kupplungseinrichtung (16) eine insbesonders elektromotorisch schaltbare Kupplungsreinrichtung (16) ist.

14. Motorrad (1) nach einem der vorstehenden Ansprüche, **dadurch gekennzeichnet, dass** die Steuervorrichtung (9) dazu eingerichtet ist, die Kupplungseinrichtung (16) zum Öffnen und Schließen anzusteuern.

15. Motorrad (1) nach einem der vorstehenden Ansprüche, **gekennzeichnet durch** ein Vorderrad (3) und ein Hinterrad (4) und einen Fahrersattel (5) sowie einen Gasdrehgriff (2).

## Claims

1. Motorcycle (1) having an internal combustion engine (7) having a drive means (10) and having a charging device (8) for the internal combustion engine (7), as well as a control device (9) and an electric machine (18), wherein the charging device (8) has a compressor (20) having a drive shaft (21), and has a transmission (22) having a transmission input (17) and a transmission output (23), and the compressor (20) is frictionally coupled to the transmission output (23) by means of the drive shaft (21), and the transmission input (17) is to be driven by means of the electric machine (18) and/or the drive means (10), wherein a switchable coupling device is provided between the drive means (10) of the internal combustion engine (7) and the transmission input (17), **characterised in that** the motorbike (1) is configured to capture an increased power demand on the internal combustion engine (7) by a user of the motorcycle (1) and, when the coupling device (16) is open, to put the electric machine (18) into an operating state driving the compressor (20) to provide compressed charge air, which causes an increase in the speed of the internal combustion engine (7) until a predetermined speed range of the internal combustion engine (7) is reached, and the motorcycle (1) is configured to close the coupling device (16) to drive the compressor (20) by means of the drive means (10) of the internal combustion engine (20) when the speed range is reached.

2. Motorcycle according to claim 1, **characterised in that** the transmission (22) is a spur transmission having a plurality of transmission stages, or a planetary gear (22).

3. Motorcycle (1) according to claim 1 or 2, **characterised in that** the drive means (10) is a traction means stage or a gear stage.

4. Motorcycle (1) according to one of the preceding claims, **characterised in that** the transmission input (17) has a transmission input shaft (26) and the electric machine (18) is coupled to the transmission input shaft (26) in a rotationally fixed manner.

5. Motorcycle (1) according to one of the preceding claims, **characterised in that** the coupling device (16) is closed in a first operating state and the drive shaft (21) of the compressor (20) is driven via the transmission (22) by means of the drive means (10) of the internal combustion engine (7), and the motorcycle (1) is configured to supply the internal combustion engine (7) with charge air pressurised by the compressor (20).

6. Motorcycle (1) according to one of the preceding claims, **characterised in** the coupling device (16) is open in a second operating state and the transmission shaft (21) of the compressor (20) is driven my means of the electric machine (18) and the motorcycle (1) is configured to supply the internal combustion engine (7) with charge air pressurised by the compressor (20).

7. Motorcycle (1) according to claim 6, **characterised in that** the motorbike (1) is configured to maintain the second operating condition with opened coupling device (16) with increasing speed of the internal combustion engine (7) until a predetermined speed of the internal combustion engine (7) is reached, after which the coupling device (16) is closed and the electric machine (18) is placed in an operating state different from that established for driving the compressor (20).

8. Motorcycle (1) according to one of the preceding claims, **characterised in that** the motorcycle (1) is configured to put the electric machine (18) into an operating state in which it drives the compressor (20) to deliver compressed charge air, or to put it into a generating operating state in which it supplies an on-board voltage network of the motorbike (1) with electrical energy, or puts it into an operating state in which it provides drive power to drive the motorcycle (1), which is added to the drive power of the internal combustion engine to drive the motorcycle (1).

9. Motorcycle (1) according to one of the preceding claims, **characterised in that** the motorcycle (1) is configured to put the coupling device (16) into an opened state and to put the electric machine (18) into a unpowered state, when the suction motor drive power of the internal combustion engine (7) is sufficient.

10. Motorcycle (1) according to one of the preceding claims, **characterised in that** the motorcycle (1) is configured to adjust the speed of the drive shaft (21) of the compressor (20) to the need of the internal combustion engine (7) for charge air by changing the drive speed of the transmission output (23).

11. Motorcycle (1) according to one of the preceding claims, **characterised in that** the motorcycle (1) is configured to control the coupling device (16) to drive the compressor (20) in such a way that the drive shaft (21) of the compressor (20) is driven via the transmission (22), both by the electric machine (18) and by the internal combustion engine (7).

12. Motorcycle (1) according to one of the preceding claims, **characterised in that** the motorcycle (1) is configured to determine the currently required drive power of the internal combustion engine (7) depending on the current driving state of the motorcycle (1) and to put the coupling device (16) into an open state after determining that the current drive power provided in the suction mode engine of the internal combustion engine (7) is sufficient.

13. Motorcycle (1) according to one of the preceding claims, **characterised in that** the coupling device (16) is an in particular electromotively switchable coupling device (16).

14. Motorcycle (1) according to one of the preceding claims, **characterised in that** the control device (9) is configured to make the coupling device (16) open and close.

15. Motorcycle (1) according to one of the preceding claims, **characterised by** a front wheel (3) and a back wheel (4) and a driver saddle (5) as well as a throttle grip (2).

## Revendications

1. Motocycle (1) comportant un moteur à combustion interne (7) pourvu d'un système d'entraînement (10) et un dispositif de suralimentation (8) pour ledit moteur à combustion interne (7), ainsi qu'un dispositif de commande (9) et une machine électrique (18), ledit dispositif de suralimentation (8) comprenant un compresseur (20) comportant un arbre d'entraînement (21) et présentant une transmission (22) dotée d'une entrée (17) et d'une sortie (23), ledit compresseur (20) étant couplé à force à la sortie (23) de la transmission par l'intermédiaire de l'arbre d'entraînement (21), et l'entrée (17) de la transmission pouvant être actionnée par la machine électrique (18) et/ou le système d'entraînement (10) ; un dispositif d'embrayage (16) commutable étant prévu entre le système d'entraînement (10) du moteur à combustion interne (7) et l'entrée (17) de la transmission ; **caractérisé en ce que** le motocycle (1) est conçu pour détecter une demande de puissance accrue du moteur à combustion interne (7) déclenchée par l'utilisateur du motocycle (1) et, tandis que le dispositif d'embrayage (16) est ouvert, pour mettre la machine électrique (18) dans un état de fonctionnement qui entraîne le compresseur (20) de façon qu'il fournisse de l'air comprimé et qui conduit à une augmentation de la vitesse du moteur à combustion interne (7) jusqu'à ce qu'une plage de vitesse prédéterminée du moteur à combustion interne (7) soit atteinte, et le motocycle (1) est conçu pour fermer le dispositif d'embrayage (16) pour entraîner le compresseur (20) par le système d'entraînement (10) du moteur à combustion interne (7) lorsque la plage de vitesse est atteinte.

2. Motocycle (1) selon la revendication 1, **caractérisé en ce que** la transmission (22) est une transmission à engrenage droit avec une pluralité d'étages de transmission ou une transmission à engrenage planétaire (22).

3. Motocycle (1) selon la revendication 1 ou 2, **caractérisé en ce que** le système d'entraînement (10) est un étage à élément tendu ou un étage à roue dentée.

4. Motocycle (1) selon l'une des revendications précédentes, **caractérisé en ce que** l'entrée (17) de la transmission présente un arbre d'entrée de transmission (26) et la machine électrique (18) est couplée à l'arbre d'entrée de transmission (26) de manière fixe en rotation.

5. Motocycle (1) selon l'une des revendications précédentes, **caractérisé en ce que**, dans un premier état de fonctionnement, le dispositif d'embrayage (16) est fermé et l'arbre d'entraînement (21) du compresseur (20) est entraîné par le biais de la transmission (22) au moyen du système d'entraînement (10) du moteur à combustion interne (7), et le motocycle (1) est conçu pour alimenter le moteur à combustion interne (7) en air de suralimentation mis sous pression par le compresseur (20).

6. Motocycle (1) selon l'une des revendications précédentes, **caractérisé en ce que**, dans un deuxième état de fonctionnement, le dispositif d'embrayage (16) est ouvert et l'arbre d'entraînement (21) du compresseur (20) est entraîné au moyen de la machine électrique (18), et le motocycle (1) est conçu pour alimenter le moteur à combustion interne (7) en air de suralimentation mis sous pression par le compresseur (20).

7. Motocycle (1) selon la revendication 6, **caractérisé en ce que** le motocycle (1) est conçu pour maintenir le deuxième état de fonctionnement à dispositif d'embrayage (16) ouvert lorsque la vitesse du moteur à combustion interne (7) augmente jusqu'à ce qu'une vitesse prédéterminée du moteur à combustion interne (7) soit atteinte, après quoi le dispositif d'embrayage (16) est fermé et la machine électrique (18) est mise dans un état de fonctionnement différent d'un état de fonctionnement conçu pour entraîner le compresseur (20).

8. Motocycle (1) selon l'une des revendications précédentes, **caractérisé en ce que** le motocycle (1) est conçu pour mettre la machine électrique (18) dans un état de fonctionnement dans lequel elle entraîne le compresseur (20) pour fournir de l'air de suralimentation comprimé, ou dans un état de fonctionnement de générateur dans lequel elle alimente un réseau de tension embarqué du motocycle (1) en énergie électrique, ou dans un état de fonctionnement dans lequel elle fournit une puissance d'entraînement du motocycle (1) et qui s'ajoute à la puissance d'entraînement fournie par le moteur à combustion interne pour entraîner le motocycle (1).

9. Motocycle (1) selon l'une des revendications précédentes, **caractérisé en ce que** le motocycle (1) est conçu pour mettre le dispositif d'embrayage (16) à l'état ouvert et mettre la machine électrique (18) dans un état sans entraînement lorsque la puissance d'entraînement du moteur à combustion interne (7) a fonction de moteur atmosphérique est suffisante pour entraîner le motocycle (1).

10. Motocycle (1) selon l'une des revendications précédentes, **caractérisé en ce que** le motocycle (1) est conçu pour adapter la vitesse de l'arbre d'entraînement (21) du compresseur (20) aux besoins en air de suralimentation du moteur à combustion interne (7) en modifiant la vitesse d'entraînement de la sortie (23) de la transmission.

11. Motocycle (1) selon l'une des revendications précédentes, **caractérisé en ce que** le motocycle (1) est conçu pour commander le dispositif d'embrayage (16) pour entraîner le compresseur (20) de telle façon que l'arbre d'entraînement (21) du compresseur (20) soit entraîné par le biais de la transmission (22) à la fois par la machine électrique (18) et par le moteur à combustion interne (7).

12. Motocycle (1) selon l'une des revendications précédentes, **caractérisé en ce que** le motocycle (1) est conçu pour déterminer la puissance d'entraînement actuellement requise du moteur à combustion interne (7) étant donné l'état de conduite actuel du motocycle (1) et pour mettre le dispositif d'embrayage (16) à l'état ouvert après une détermination que la puissance d'entraînement actuelle fournie en fonctionnement moteur atmosphérique du moteur à combustion interne (7) est suffisante.

13. Motocycle (1) selon l'une des revendications précédentes, **caractérisé en ce que** le dispositif d'embrayage (16) consiste en un dispositif d'embrayage (16) commutable, notamment par un moteur électrique.

14. Motocycle (1) selon l'une des revendications précédentes, **caractérisé en ce que** le dispositif de commande (9) est conçu pour commander l'ouverture et la fermeture du dispositif d'embrayage (16).

15. Motocycle (1) selon l'une des revendications précédentes, **caractérisé par** une roue avant (3) et une roue arrière (4) et une selle de conducteur (5) ainsi qu'une poignée d'accélérateur (2).
